# EUROPEAN PATENT SPECIFICATION

(11) **EP 0 404 438 B1**
(45) Date of publication and mention of the grant of the patent: **21.08.1996**
(21) Application number: 90306492.1
(22) Date of filing: 14.06.1990
(51) Int. Cl.: G11B 7/135, G11B 7/085, G11B 7/09, G11B 7/08, G11B 11/10

(54) **Optical pick-up head apparatus**
Optische Abtasteinheit
Dispositif de tête de reproduction optique

(30) Priority: 21.06.1989 JP 158529/89
(43) Date of publication of application: 27.12.1990
(73) Proprietor: SONY CORPORATION, Tokyo 141 (JP)
(72) Inventor: Eguchi, Naoya, c/o Patents Division, Shinagawa-ku Tokyo 141 (JP)
(74) Representative: Cotter, Ivan John

(56) References cited:
- EP-A- 118 626
- EP-A- 0 114 082
- EP-A- 0 203 816
- JP-A- 1 150 241

## Description

This invention relates to optical pick-up head apparatus, for use, for example, in a recording and/or reproducing apparatus which records and/or reproduces a so-called optical disc such as a magneto-optical disc.

An optical disc recording and/or reproducing apparatus for recording and/or reproducing an optical disc such as a magneto-optical disc may include a linear motor system to translate an objective lens. For example, US patent specifications US-A-4 545 046 which corresponds to EP-A-114082 and US-A-4 607 913 describe such optical pick-up head apparatus. In such an apparatus, if two parallel guide rods of the apparatus are not supported very accurately, then this will impair smooth movement of a movable member to which the objective lens is attached. Moreover, in this type of optical pick-up head apparatus, the bearings attached to the movable member are expensive. Also, if the bearings are not identical in their properties, movement of the movable member will be impaired.

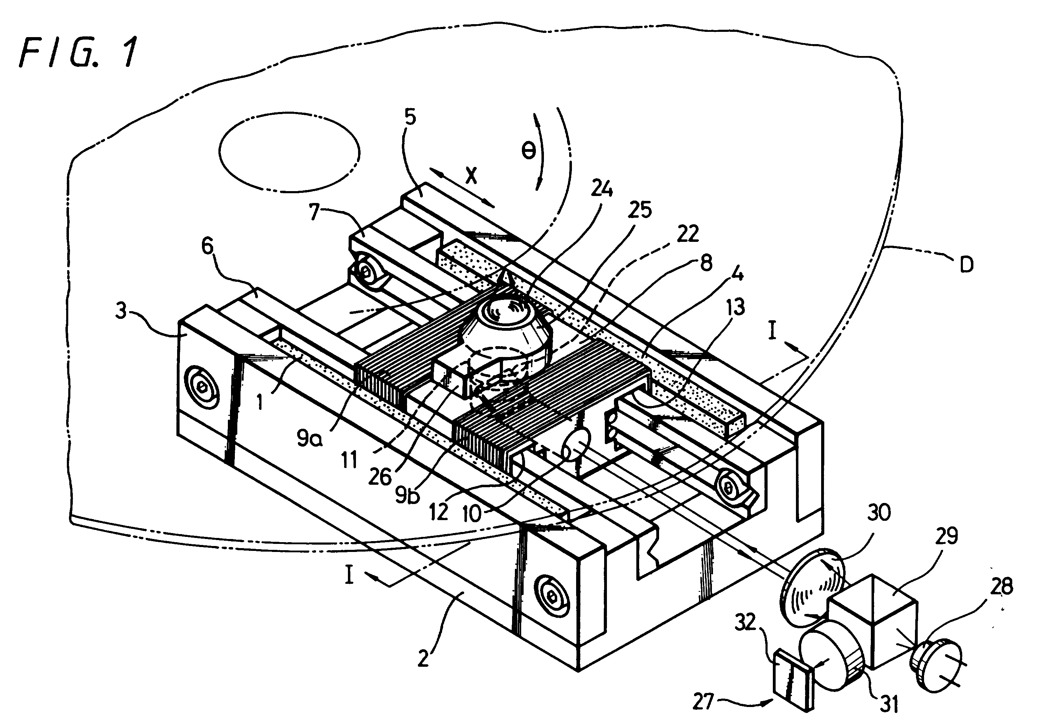

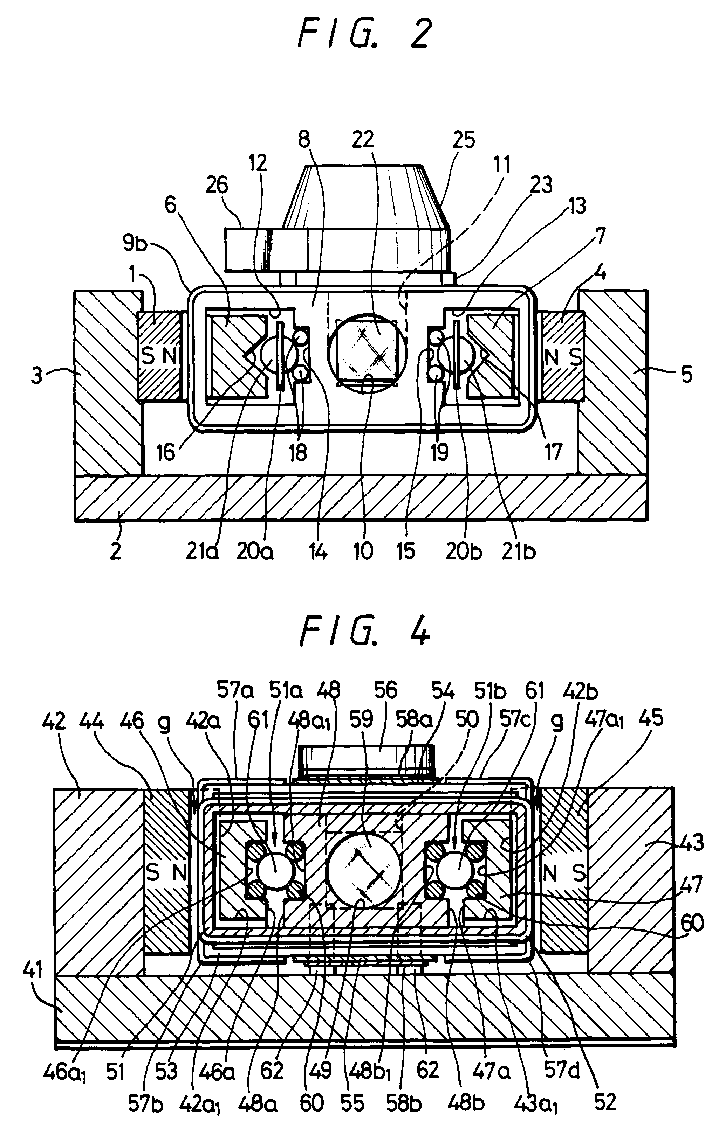

Our US patent specification US-A-4 864 170 published on 5 September 1989 describes a linear motor which can be applied to such an optical pick-up head apparatus, and this will now be described with reference to Figures 1 and 2. Figure 1 is a perspective view of the linear motor, and Figure 2 is a transverse sectional view taken on the line I - I in Figure 1.

Referring to Figures 1 and 2, two permanent stator magnets 1 and 4 are each magnetized in the thickness direction thereof. A base plate 2 is made of a magnetizable material, for example, iron, and has secured on it two outer stator yokes 3 and 5. The stator magnet 1 is attached to the inner side of the stator yoke 3, and the stator magnet 4 is similarly attached to the inner side of the stator yoke 5, leaving a predetermined clearance. Enclosing the stator magnets 1 and 4, inner stator yokes 6 and 7 are secured to the base plate 2, such that they form closed magnetic paths together with the outer stator yokes 3 and 5.

A frame or bobbin 8 has at least the outer peripheral portion thereof made of a non-magnetic material. A pair of coils 9a and 9b are wound around two end portions of the bobbin 8, and through-holes 10 and 11 are formed through the bobbin 8 so that they intersect each other in the front and rear direction as well as the upper and lower direction. The bobbin 8 also has formed therethrough a pair of apertures 12 and 13 which penetrate the pair of coils 9a and 9b. The inner stator yokes 6 and 7 are inserted into the pair of apertures 12 and 13.

Guide grooves 14, 15 and 16, 17 are formed on the inside surfaces of the apertures 12 and 13 and on the inner surfaces of the inner stator yokes 6 and 7. As shown in Figure 2, pairs of shafts 18 and 19 are attached to the guide grooves 14 and 15, and balls 21a and 21b are supported by supporting members 20a and 20b within these guide grooves 14, 15 and 16, 17. Therefore, the bobbin 8 is supported on the inner stator yokes 6 and 7 via the balls 21a and 21b, whereby the bobbin 8 can move freely in the longitudinal direction of the inner stator yokes 6 and 7.

A reflecting mirror 22 for changing a light path is secured where the holes 10 and 11 intersect. An optical pick-up 25 having an objective lens 24 is attached to the exit side of the vertically-elongated hole 11 by a mount 23. The optical pick-up 25 faces an optical disc D, and includes a focusing motor 26 to move the objective lens 24 in the optical axis direction of the objective lens 24.

As shown in Figure 1, a read-out optical system 27 is located in the direction in which the hole 10 formed through the bobbin 8 in the front and rear direction extends rearward. The read-out optical system 27 comprises a laser diode 28, a beam splitter 29, a collimator lens 30, a light receiving system 31, and a photo-diode 32. With the read-out optical system 27, a light beam emitted from the laser diode 28 travels over a light path formed of the collimator lens 30, the mirror 22, the objective lens 24 of the optical pick-up 25, the optical disc D, the objective lens 24, the mirror 22, the collimator lens 30, the beam splitter 29 and the light receiving system 31, in that order, and is incident on the photo-diode 32.

In this optical pick-up head apparatus, when both the coils 9a and 9b are energized, the bobbin 8 is acted on by a driving force according to Fleming's left-hand rule, due to the reaction between the current and the magnetic field produced by the magnets 1 and 4 and the yokes 3, 6 and 5, 7, that is, a linear motor is formed, whereby the optical pick-up 25 is moved in the radial direction of the optical disc D. During this operation of the optical pick-up 25 the objective lens 24 of the optical pick-up 25 is driven by the focusing motor 26, so that the focus of the objective lens 24 is adjusted.

In this optical pick-up head apparatus, the linear motor for moving the optical pick-up 25 is compact, because the bobbin 8 supporting the optical pick-up 25 utilizes the inner stator yokes 6 and 7 as guides. However, the optical pick-up 25 is provided with the focusing motor 26 which moves the objective lens 24, and the focusing motor 26 and the feed linear motor form different magnetic circuits, which are liable to interfere with each other. Thus, there may be a magnetically neutral zone which interferes with the movement of the optical pick-up 25, that is, the bobbin 8.

Moreover, the bobbin 8 is loaded with the weight of the magnetic circuit of the focusing motor 26, so that the moving mass is increased, which results in a lower accessing speed. Also, the number of magnets forming the magnetic circuits is increased, which increases the cost.

According to the invention there is provided an optical pick-up head apparatus comprising:
a stationary optical system including a laser light beam source, photodetecting means, a beam splitter to split a light beam emitted from the laser light beam source, so that a portion of the light beam is irradiated on the photodetecting means;
a movable optical system having an objective lens, a first coil, a focusing actuator to support the objective lens and to move the objective lens in a direction parallel to an optical axis of the objective lens to focus the light beam emitted from the laser light source on an optical disc using at least one of a plurality of second coils, each having four sides and being formed as a substantially square coil of L-letter shape, a pair of sides of each of the plurality of second coils being formed perpendicular to the optical axis of the objective lens, one side of each of the plurality of second coils being formed parallel to the optical axis of the objective lens, a member provided on the actuator, a linear motor including a pair of magnets provided to face the first coil and those sides of the plurality of second coils parallel to the optical axis, whereby those sides of the plurality of second coils parallel to the optical axis are within a common magnetic gap formed by the magnets of the linear motor, guiding means to guide the member in a direction perpendicular to the axis of the objective lens, and a pair of yokes each facing a respective one of the pair of magnets;
a tracking control means provided between the stationary optical system and the movable optical system to perform a tracking control so that a beam spot formed on the optical disc by a light beam emitted from said laser light source follows tracks on the optical disc and including a mirror to change a path of the light beam emitted from the laser light beam source and the light beam irradiated on the photodetecting means;
the stationary optical system and the movable optical system being provided so that the optical axis of the light path through which a light beam emitted from the laser light source reaches the mirror, and the optical axis of the light path in which a reflected-back laser beam from the optical disc D reaches the photo detecting means from the mirror are in the same plane.

The invention will now be described by way of example with reference to the accompanying drawings, throughout which like parts are referred to by like references, and in which:
Figure 1 is a perspective view of an example of a previously-proposed optical pick-up apparatus;
Figure 2 is a transverse sectional view taken on the line I - I in Figure 1;
Figure 3 is a perspective view of an embodiment of optical pick-up apparatus according to the present invention;
Figure 4 is an enlarged transverse sectional view taken on the line II - II in Figure 3;
Figure 5 is an enlarged longitudinal sectional view of the embodiment; and
Figure 6 is an exploded perspective view of part of the embodiment.

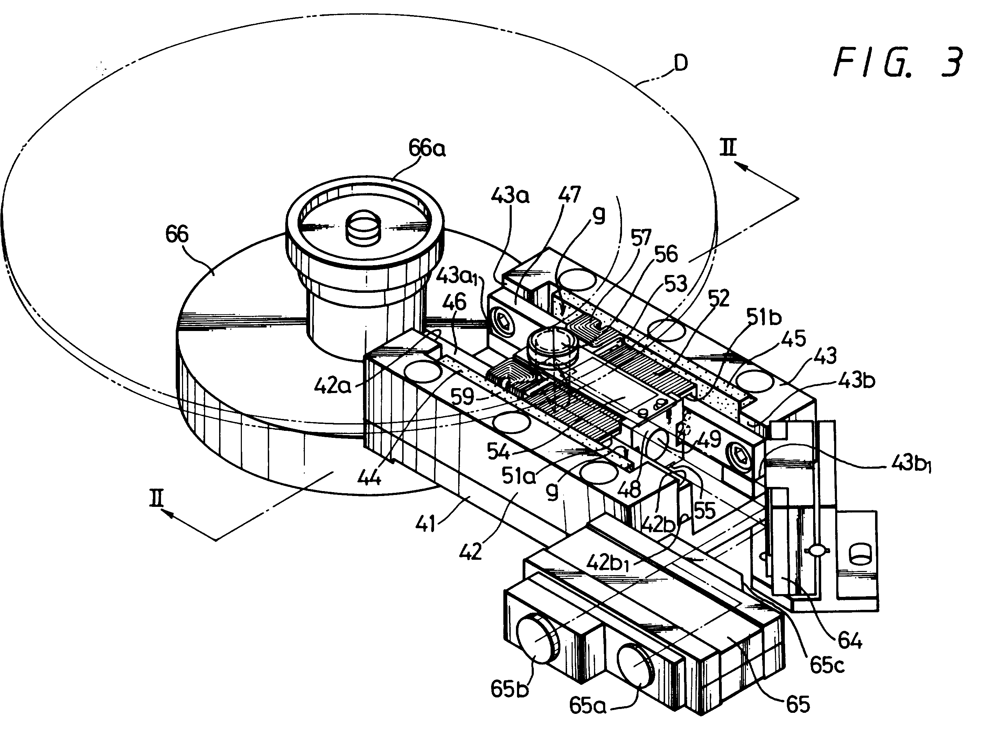

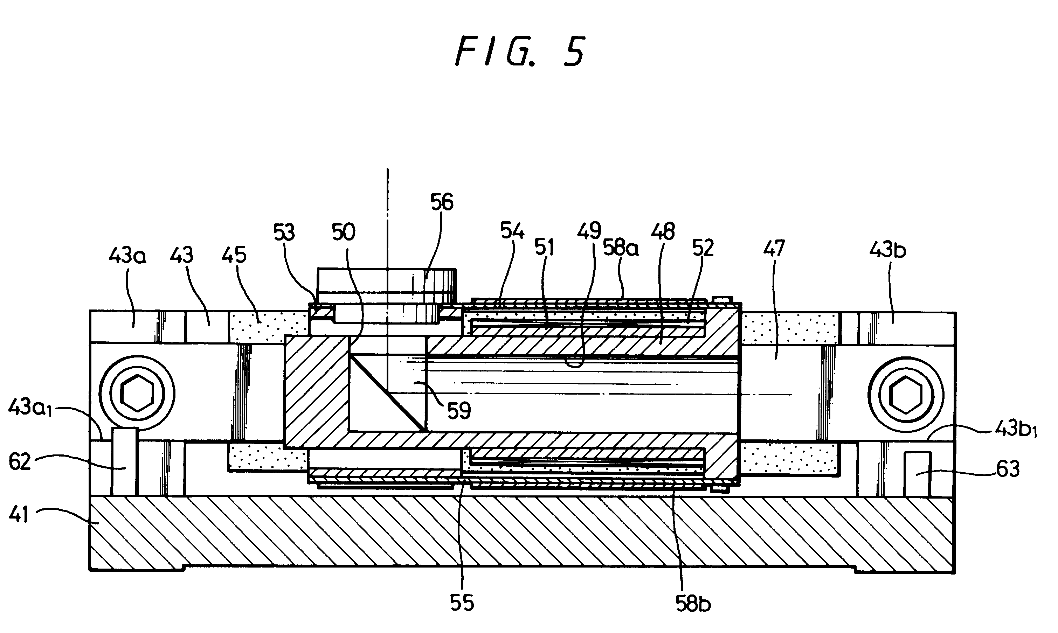

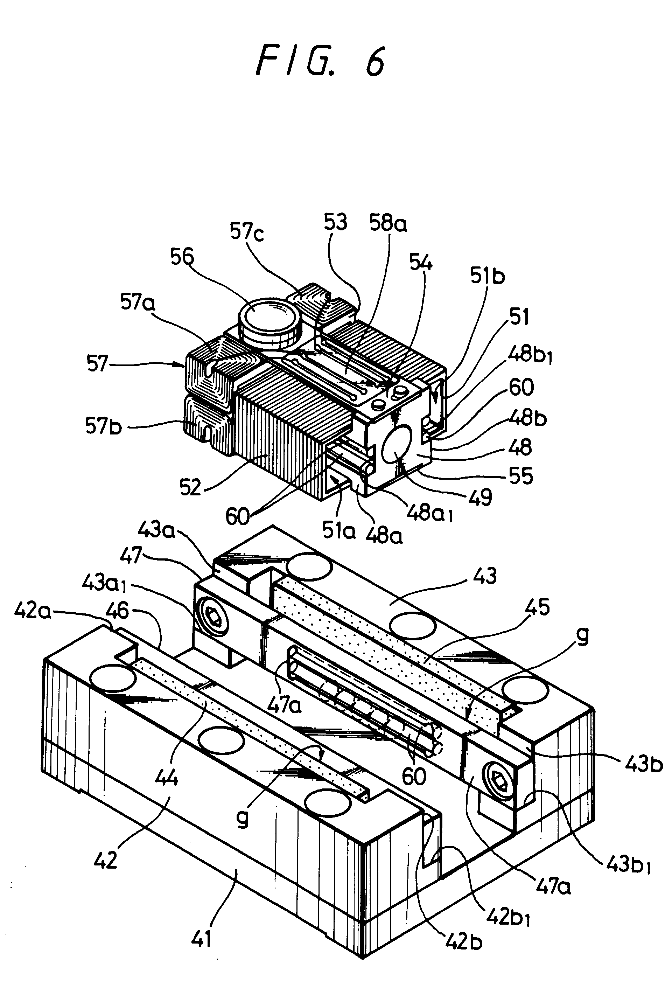

Referring to Figures 3 to 6, there is shown a base plate 41 of a rectangular shape which is made of a rigid material. Outer yokes 42 and 43 of substantially U-shape are secured to the two side portions of the base plate 41 in the longitudinal direction of the surface of the base plate 41 in facing relation. Magnets 44 and 45, each magnetized in the thickness direction, are attached to the inside surfaces of the outer yokes 42 and 43, respectively.

Inner yokes 46 and 47 are respectively coupled to the outer yokes 42 and 43 at two inner end faces 42a, 42b and 43a, 43b, whereby the magnets 44 and 45 are respectively encircled by the yokes 42, 43, 46 and 47 to form closed magnetic paths. More specifically, the inner yokes 46 and 47 are held on stepped surfaces 42a1, 42b1, 43a1 and 43b1 of predetermined height formed-on the inner ends of the outer yokes 42 and 43. Thus, magnetic gaps g of a predetermined width are respectively formed between the magnets 44 and 45 and the inner yokes 46 and 47, and the inner yokes 46 and 47 are supported on the surface of the base plate 42 at a predetermined spacing.

A movable member 48 has formed therethrough holes 49 and 50 intersecting each other in the front and rear direction and in the upper and lower direction. A bobbin 51 made of a non-magnetic material is engaged with the rear half portion of the movable member 48 such that a pair of through-holes 51a and 51b are respectively formed between two side surfaces 48a and 48b of the movable member 48 and the bobbin 51. A slide drive coil 52 is wound around the outer peripheral surface of the bobbin 51 as a first coil.

An objective lens supporting member 53 which is shaped as a rectangular frame is supported on the first half portion of the movable member 48 by parallel plate springs 54 and 55 so as to be freely movable in the upper and lower direction. An objective lens 56 is attached to the objective lens supporting member 53 in facing relation to the exit side of the hole 50 extending in the upper and lower direction of the movable member 48.

Flat coils 57a, 57b, 57c and 57d are moulded in L-shape and are secured to four corners of the objective lens supporting member 53, respectively, whereby horizontal portions of the respective flat coils in the two side surfaces of the supporting member 53 form a focusing coil 57 which might be referred to as a second coil. The flat coils 57a, 57b, 57c and 57d are respectively energized by bonding flexible printed circuit boards 58a and 58b to the plate springs 54 and 55. When the circuit boards 58a and 58b are bonded to the plate springs 54 and 55, resonance of the plate springs 54 and 55 can be suppressed, so improving the silencing. Preferably, the plate springs 54 and 55 are each made of a non-magnetic material such as helium bronze or phosphor bronze. The focusing coil 57 may be formed by bending wound wires of square shape in an L-shape as described above. Alternatively, the focusing coil 57 may be formed by using a flexible printed circuit board. When the focusing coil 57 is formed by using a flexible printed circuit board, the focusing coil 57 can easily be coupled to the flexible printed circuit board secured to the plate springs 54 and 55.

A reflecting mirror 59 for changing a light path is secured to a portion in which the front and rear direction hole 49 and the upper and lower direction hole 50 of the movable member 48 intersect, so that the optical axes of light beams travelling through the holes 49 and 50 are set at a right angle by the mirror 59.

The inner yokes 46 and 47 are inserted into the pair of holes 51a and 51b through a hollow portion of the objective lens supporting member 53.

Guide grooves 48a1, 48b1, 46a1 and 47a1 of U-shape cross-section are respectively formed on the inner surfaces of the holes 51a and 51b, that is, on the side surfaces 48a and 48b of the movable member 48 and magnet-non-opposing surfaces 46a and 47a of the inner yokes 46 and 47 opposing the side surfaces 48a and 48b. A shaft 60 is respectively provided at each of the corners of the guide grooves 48a1, 48b1, 46a1 and 47a1.

Each of the shafts 60 is formed by grinding an outer surface of a rod moulded, for example, from ceramic or stainless steel. The shafts 60 are secured to the corners of the guide grooves 48a1, 48b1, 46a1, and 47a1 by a bonding agent (not shown). Accordingly, four shafts 60 are provided at each side of the movable member 48 in facing relation to each other. Respective balls 61 are interposed between each group of four shafts 60. The balls 61 are each made of non-magnetic material such as, stainless steel, ceramic, ruby or sapphire.

In this way, the movable member 48 is supported on the inner yokes 46 and 47 via the balls 61 so as to be freely movable along the inner yokes 46 and 47. During the movement of the movable member 48, the ball 61 rotates between the shafts 60, the outer surfaces of which are ground, whereby the movable member 48 can move stably and accurately. Stops 62 and 63 are formed on the front and rear ends of the surface of the base plate 41 to stop the movable member 48 at predetermined positions. The stops 62 and 63 are each made, for example, of acrylonitrile butadience styrene copolymer or rubber.

As shown in Figure 3, there is provided a galvanomirror 64 located at an angle of substantially 45^{o} to the direction in which the front and rear direction hole 49 of the movable member 48 extends rearwards. A read-out optical system 65 is located at an angle of substantially 45^{o} to the galvanomirror 64. The read-out optical system 65 comprises a laser diode 65a, a photo-diode 65b and a beam splitter 65c.

In this embodiment, the read-out optical system 65 and the galvanomirror 64 form a stationary optical systems and the mirror 59 and the objective lens 56 form a movable optical system. These stationary and movable optical systems are located in the same plane, whereby the thickness of the whole optical pick-up head apparatus can be reduced.

More precisely, the stationary optical system formed of the read-out optical system 65 and the galvanomirror 64, and the movable optical system formed of the mirror 59 and the objective lens 56 are respectively located such that the optical axis of the light path through which a light beam emitted from the laser diode 65a reaches the mirror 59, and the optical axis of the light path in which a reflected-back laser beam from the optical disc D reaches the photo 65c from the mirror 59 are provided in the same plane. The mirror 59 is located such that the optical axis of the light path over which the laser beam emitted from the laser diode 65a reaches the optical disc D via the mirror 59 and the optical axis of the light path over which the reflected-back laser beam from the optical disc D reaches the mirror 59 are perpendicular to the above plane.

In accordance with this embodiment, however, the light path over which the laser beam reaches the mirror 59 via the beam splitter 65c and the galvanomirror 64, and the light path between the mirror 59 and the optical disc D are made common to the light beam from the laser diode 65a and the reflected-back light beam from the optical disc D. Therefore, the emitted light beam and the reflected-back light beam are distributed by the beam splitter 65c such that the emitted light beam reaches the galvanomirror 64, while the reflected-back light beam reaches the photo-diode 65c.

As described above, the laser beam emitted from the laser diode 65a is introduced into the photo-diode 65b via the galvanomirror 64, the mirror 59, the objective lens 56, the optical disc D, the objective lens 56, the mirror 59 and the galvanomirror 64, in that order. A focusing error signal and a tracking error signal are generated on the basis of the detected output from the photo-diode 65b. As will be described later, the focusing error signal is supplied to the focusing coil 57, and the tracking error signal is supplied to the galvanomirror 64. The galvanomirror 64 performs the tracking servo by rotating the mirror thereof on the basis of the tracking error signal, so that the light beam spot on the optical disc D moves across the tracks formed on the optical disc D.

Turning to Figure 3, there is shown a spindle motor 66 which rotates the optical disc D. The spindle motor 66 is coupled to a disc table 66a on which there is chucked the optical disc D.

As described above, the movable member 48 is supported by the inner yokes 46 and 47 via the balls 61, and the respective side portions of the slide drive coil 52 wound around the bobbin 51 and the horizontal portions of the side surface sides of the deflection coils 57a and 57d secured to the objective lens supporting member 53, that is, the focusing coil 57 is placed within the magnetic gaps g between the magnets 44 and 45 and the inner yokes 46 and 47, whereby the magnetic circuits of the slide motor and the focusing motor are made common.

Moreover, the inner yokes 46 and 47 form a closed magnetic path with the outer yokes 42 and 43 attached to the base plate 41, and also serve as the guide shafts for guiding the movable member 48 so that a guide shaft and a slidable base plate are not needed additionally.

In the thus constructed optical pick-up head apparatus, when the slide driving coil 52 wound around the bobbin 51 of the movable member 48 is energized on the basis of an access command or the like from, for example, a control circuit (not shown), the movable member 48 is given a driving force by the action of the magnetic field within the magnetic gaps g and the current, whereby the movable member 48 can be moved in the front or rear direction along the inner yokes 46 and 47 which serve as the guide shafts, that is, the movable member 48 can be moved in the radial direction of the optical disc D by a linear motor system.

Furthermore, when the focusing error signal generated on the basis of the detected output from the photo-diode 65b is supplied to the flat coils 57a to 57d fixed to the objective lens supporting members 53, the objective lens supporting member 53 is moved by the parallel plate springs 54 and 55 in the upper or lower direction parallel to the optical axis of the objective lens 56, due to the reaction between the current flowing through the horizontal portions of the respective coils located within the magnetic gaps g and the magnetic field produced within the magnetic gaps g, whereby the focusing of the objective lens 56 relative to the optical disc D is adjusted. In this way, the read-out optical system 65 reads (that is, reproduces) the optical disc D.

The movable member 48 can, for example, be unitarily formed with the bobbin 51 as one body. Moreover, either the guide grooves 48a1, 48b1, or 46a1, 47a1 or both of the guide grooves 48a1, 48b1 and 46a1, 47a1 of the inner yokes 46 and 47, and the movable member 48 can be shaped to have a cross-section of V-shape. If the two guide grooves are V-shaped, then the shafts can be omitted. Also, the number of balls interposed between the guide grooves can be increased and/or decreased, if necessary.

Furthermore, the lay out of the read-out optical system 65 and the like can be freely modified in dependence on the arrangement of the optical disc recording and/or reproducing apparatus.

In addition, by applying such an optical pick-up head apparatus to a magneto-optical disc recording and/or reproducing apparatus, it is possible to reduce the thickness of the recording and/or reproducing apparatus considerably, which has been a very difficult problem to solve, because an external magnetic field generating apparatus must be provided at the disc surface side opposite to the recording and/or reproducing apparatus across the magneto-optical disc, in prior-art magneto-optical disc recording and/or reproducing apparatus.

As set out above, in an embodiment of the present invention, since the magnetic circuits of the slide drive motor which moves the objective lens in the radial direction of the optical disc of the focusing motor which moves the objective lens in its optical axis direction are made common, the movable member does not need a heavy magnet, so that the mass of the movable member can be reduced. Also, mutual interference can be avoided between the magnetic circuits of the two motors, and a magnetically neutral portion can be prevented from being produced in the movement of the objective lens, thus making it possible stably to move the objective lens at high speed. Therefore, the reliability of the optical pick-up head apparatus can be increased.

## Claims

1. An optical pick-up head apparatus comprising:
a stationary optical system (65) including a laser light beam source (65a), photodetecting means (65b), a beam splitter (65c) to split a light beam emitted from the laser light beam source (65a), so that a portion of the light beam is irradiated on the photodetecting means (65b);
a movable optical system (56, 59) having an objective lens (56), a first coil (52), a focusing actuator (53) to support the objective lens (56) and to move the objective lens (56) in a direction parallel to an optical axis of the objective lens (56) to focus the light beam emitted from the laser light source (65a) on an optical disc using at least one of a plurality of second coils (57a, 57b, 57c, 57d), each having four sides and being formed as a substantially square coil of L-letter shape, a pair of sides of each of the plurality of second coils being formed perpendicular to the optical axis of the objective lens (56), one side of each of the plurality of second coils being formed parallel to the optical axis of the objective lens (56), a member (48) provided on the actuator (53), a linear motor including a pair of magnets (44, 45) provided to face the first coil (52) and those sides of the plurality of second coils (57a, 57b, 57c, 57d) parallel to the optical axis, whereby those sides of the plurality of second coils parallel to the optical axis are within a common magnetic gap (2) formed by the magnets (44, 45) of the linear motor, guiding means (48a1, 48b1, 46a1, 47a1, 60) to guide the member (48) in a direction perpendicular to the axis of the objective lens, and a pair of yokes (46, 47) each facing a respective one of the pair of magnets (44, 45);
a tracking control means provided between the stationary optical system (65) and the movable optical system (56, 59) to perform a tracking control so that a beam spot formed on the optical disc by a light beam emitted from said laser light source (64a) follows tracks on the optical disc and including a mirror (59) to change a path of the light beam emitted from the laser light beam source (65a) and the light beam irradiated on the photodetecting means (65b);
the stationary optical system (65) and the movable optical system being provided so that the optical axis of the light path through which a light beam emitted from the laser light source (65a) reaches the mirror (59), and the optical axis of the light path in which a reflected-back laser beam from the optical disc D reaches the photo detecting means (65c) from the mirror (59) are in the same plane.

## Patentansprüche

1. Optische Abtastkopf-Einrichtung, die umfaßt:
ein stationäres optisches System (65), das enthält: eine Laser-Lichtstrahlquelle (65a), ein Lichterfassungsmittel (65b), einen Strahlteiler (65c) zum Teilen eines Lichtstrahls, der von der Laser-Lichtstrahlquelle (65a) ausgesendet wird, so daß ein Teil des Lichtstrahls auf das Lichterfassungsmittel (65b) abgestrahlt wird,
ein bewegbares optisches System (56, 59), das enthält: eine Objektivlinse (56), eine erste Spule (52), einen Fokussierungs-Aktor (53) zum Tragen der Objektivlinse (56) und zum Bewegen der Objektivlinse (56) in einer Richtung parallel zu einer optischen Achse der Objektivlinse (56), um den von der Laser-Lichtstrahlquelle (65a) ausgestrahlten Lichtstrahl unter Benutzung zumindest einer aus einer Vielzahl von zweiten Spulen (57a, 57b, 57c, 57d), wovon jede vier Seiten hat und im wesentlichen als eine quadratische Spule mit einer L-Form ausgebildet ist, wobei ein Paar von Seiten jeder aus der Vielzahl von zweiten Spulen senkrecht zu der optischen Achse der Objektivlinse (56) ausgebildet ist, auf eine optische Platte zu fokussieren, wobei eine Seite jeder aus der Vielzahl von zweiten Spulen parallel zu der optischen Achse der Objektivlinse (56) ausgebildet ist, ein Element (48), das auf dem Aktor (53) vorgesehen ist, einen Linearmotor, der ein Paar von Magneten (44, 45) enthält, die vorgesehen sind, um der ersten Spule (52) und denjenigen Seiten der Vielzahl von zweiten Spulen (57a, 57b, 57c, 57d), die parallel zu der optischen Achse liegen, gegenüberzustehen, wodurch sich diejenigen Seiten der Vielzahl von zweiten Spulen, die parallel zu der optischen Achse liegen, innerhalb eines gemeinsamen Magnetspalts (2) befinden, der durch die Magnete (44, 45) des Linearmotors gebildet ist, Führungsmittel (48a1, 48b1, 46a1, 47a1, 60) zum Führen des Elements (48) in einer Richtung senkrecht zu der Achse der Objektivlinse und ein Paar von Jochen (46, 47), wovon jedes einem betreffenden des Paars von Magneten (44, 45) gegenübersteht,
ein Spurverfolgungssteuerungsmittel, das zwischen dem stationären optischen System (65) und dem bewegbaren optischen System (56, 59) zum Durchführen einer Spurverfolgungssteuerung derart, daß ein Strahlpunkt, der auf der optischen Platte durch einen Lichtstrahl gebildet ist, welcher von der Laser-Lichtstrahlquelle (65a) ausgesendet ist, Spuren auf der optischen Platte folgt, vorgesehen ist und einen Spiegel (59) zum Ändern eines Wegs des Lichtstrahls, der von der Laser-Lichtstrahlquelle (65a) ausgesendet ist, und des Lichtstrahls, der auf das Lichterfassungsmittel (65b) abgestrahlt wird, enthält,
wobei das stationäre optische System (65) und das bewegbare optische System derart vorgesehen sind, daß die optische Achse des Lichtwegs, über den ein Lichtstrahl, der von der Laser-Lichtstrahlquelle (65a) ausgesendet ist, den Spiegel (59) erreicht, und die optische Achse des Lichtwegs, über den ein von der optischen Platte D zurückgeworfener Laser-Lichtstrahl von dem Spiegel (59) aus das Lichterfassungsmittel (65b) erreicht, in derselben Ebene liegen.

## Revendications

1. Appareil à tête à capteur optique, comprenant :
un système optique fixe (65) comprenant une source d'un faisceau de lumière laser (65a), un dispositif photodétecteur (65b), un répartiteur de faisceau (65c) destiné à diviser un faisceau lumineux émis par la source de faisceau de lumière laser (65a) de manière qu'une partie du faisceau lumineux soit projetée sur le dispositif photodétecteur (65b),
un système optique mobile (56, 59) ayant un objectif (56), un premier enroulement (52), un organe de manoeuvre (53) de focalisation destiné à supporter l'objectif (56) et à deplacer l'objectif (56) en direction parallèle à un axe optique de l'objectif (56) pour la focalisation du faisceau lumineux émis par la source de lumière laser (65a) sur un disque optique à l'aide de l'un au moins de plusieurs seconds enroulements (57a, 57b, 57c, 57d), ayant chacun quatre côtés et formés d'un enroulement pratiquement carré ayant la configuration de la lettre L, deux des côtés de chacun des seconds enroulements étant perpendiculaires à l'axe optique de l'objectif (56), un côté de chacun des seconds enroulements étant parallèle à l'axe optique de l'objectif (56), un organe (48) placé sur l'organe de manoeuvre (53), un moteur linéaire comprenant deux aimants (44, 45) destinés à être tournés vers le premier enroulement (52) et les côtés des seconds enroulements (57a, 57b, 57c, 57d) qui sont parallèles à l'axe optique, si bien que les côtés des seconds enroulements qui sont parallèles à l'axe optique se trouvent dans un entrefer magnétique commun (2) formé par les aimants (44, 45) du moteur linéaire, un dispositif (48a1, 48b1, 46a1, 47a1, 60) de guidage de l'organe (48) en direction perpendiculaire à l'axe de l'objectif et deux culasses (46, 47) tournées chacune vers un aimant respectif d'une paire d'aimants (44, 45),
un dispositif de commande de poursuite, placé entre le système optique fixe (65) et le système optique mobile (56, 59) pour la commande de poursuite afin qu'une tache d'un faisceau formée sur le disque optique par un faisceau lumineux émis par la source de lumière laser (64a) suive les sillons du disque optique, et comprenant un miroir (59) destiné à changer le trajet du faisceau lumineux par la source d'un faisceau de lumière laser (65a) et le faisceau lumineux projeté sur le dispositif photodétecteur (65b),
le système optique fixe (65) et le système optique mobile étant disposés de manière que l'axe optique du trajet lumineux par lequel le faisceau lumineux émis par la source de lumière laser (65a) atteint le miroir (59) et l'axe optique du trajet lumineux dans lequel le faisceau lumineux réfléchi provenant du disque optique D atteint le dispositif photodétecteur (65c) à partir du miroir (59), se trouvent dans le même plan.
